# EUROPEAN PATENT SPECIFICATION

(11) **EP 1 378 683 B1**
(45) Date of publication and mention of the grant of the patent: **29.11.2006**
(21) Application number: 03254051.0
(22) Date of filing: 26.06.2003
(51) Int. Cl.: F16F 15/134

(54) **Flywheel device for prime mover**
Schwungradvorrichtung für Antriebsmaschine
Dispositif volant pour machine motrice

(30) Priority: 05.07.2002 JP 2002197295
(43) Date of publication of application: 07.01.2004
(73) Proprietor: HONDA GIKEN KOGYO KABUSHIKI KAISHA, Minato-ku, Tokyo (JP)
(72) Inventor: Kawahara, Kazutaka, c/o Kabushiki Kaisha Honda, Wako-shi, Saitama-ken (JP); Kitajima, Kyoji, c/o Kabushiki Kaisha Honda, Wako-shi, Saitama-ken (JP)
(74) Representative: Piésold, Alexander James

(56) References cited:
- EP-A- 0 339 805
- DE-A- 19 955 852
- GB-A- 2 194 021
- US-A- 5 788 041
- US-A- 5 868 228
- US-A1- 2002 039 926

## Description

This invention relates to a flywheel device for a prime mover, disposed between an output shaft of the prime mover and a driven shaft driven by the output shaft.

Conventionally, a flywheel device of this kind has been disclosed e.g. in the publication of Japanese Patent No. 2572770. The flywheel device is a unitary assembly formed by combining a flywheel and a torsional vibration damper (hereinafter referred to as "the torsional damper"), and disposed between an internal combustion engine and a clutch. The flywheel includes a first flywheel connected to the crankshaft of the engine, and a second flywheel rotatably supported by the crankshaft and connected to the input shaft of a transmission via the clutch. The first flywheel is disk-shaped, and has first and second casing portions opposed to each other in the direction of the axis of the crankshaft at an outer end portion thereof. A spring-accommodating chamber is formed between the casing portions in a circumferentially continuous manner. The first and second casing portions are drawn inwardly at four locations circumferentially equally spaced from each other, whereby four stoppers are formed. Further, the spring-accommodating chamber is divided into four accommodating chambers by the stoppers.

The torsional damper includes a disk-shaped flange portion mounted on the second flywheel, and torsion springs formed by four coil springs, for damping torsional vibration. The flange portion has four arms arranged at circumferentially equal intervals at an outer end portion (periphery) thereof. The arms are inserted into the stoppers of the first flywheel. The torsion springs are accommodated in the spring-accommodating chambers with opposite ends thereof in abutment with the stoppers associated therewith. The arms of the flange are engaged with the opposite ends of the torsion springs. Due to the construction described above, when the crankshaft rotates, the rotation thereof is transmitted from the first flywheel to the second flywheel via the torsion springs, and further via the clutch, if engaged, to the input shaft of the transmission.

In the above conventional flywheel device, however, since the stoppers in abutment with the torsion springs protrude inward from the casing portions, radial cross-sections of the first and second casing portions are sharply changed at boundaries between the stoppers and the spring-accommodating chambers. Accordingly, stress concentration occurs in the stoppers by a centrifugal force which acts on the first flywheel when the first flywheel rotates as the crankshaft rotates. As a result, when the rotational speed of the engine and the centrifugal force are large, very large stress locally occurring in the stoppers adversely affects durability of the first flywheel. Therefore, it is necessary to employ a flywheel made of an expensive material having great strength.

DE 19955852A discloses a torque converter having a rotational oscillation damper with a disc plate cover. The disc plate cover has a supporting periphery having support surfaces, and springs rest against the support surfaces.

It is an object of the invention to provide a flywheel device for a prime mover, which is capable of lessening stress concentration when a centrifugal force produced by rotation of an output shaft acts on a flywheel, thereby making it possible to enhance durability of the flywheel device.

The present invention provides a flywheel device for a prime mover, arranged between an output shaft of the prime mover and a driven shaft driven by the output shaft, including:
a flywheel that is mounted on the output shaft in a manner concentric therewith, the flywheel being formed with a spring-accommodating portion which extends circumferentially, and a stopper portion protruding inward with respect to the spring-accommodating portion in a direction of an axis of the output shaft, thereby forming spring-receiving stepped portions at boundaries between the stopper portion and the spring-accommodating portion,
a flange arranged concentrically with the driven shaft, and
a torsion spring that is accommodated in the spring-accommodating portion in a state in which the torsion spring is in abutment with the spring-receiving stepped portions of the stopper portion, and engaged with the flange,
wherein the stopper portion is formed with a first recess for reducing rigidity thereof, said first recess has a predetermined size and is arranged at a circumferentially central portion of said stopper portion.

According to this flywheel device, the torque of the prime mover is transmitted from the flywheel to the driven shaft via the torsion spring and the flange. As a result, the torque of the prime mover is transmitted to the driven shaft, with torsional vibrations thereof being damped by the torsion spring. Further, since the stopper portion protruding inward with respect to the spring-accommodating portion in the direction of the axis of the output shaft is formed with the recess for reducing rigidity of the stopper portion, it is possible to reduce the difference between stress in the stopper portion and stress in the spring-accommodating portion of the flywheel generated when a centrifugal force produced by rotation of the output shaft acts on the flywheel. Therefore it is possible to lessen the stress concentration occurring in the stopper portion, thereby making it possible to enhance durability of the flywheel.

Preferably, the recess comprises the first recess, and a second recess which is shallower and longer in circumferential length than the first recess.

More preferably, the second recess is formed along a whole length of the stopper portion such that the recess has a depth allowing the spring-receiving stepped portions to positively receive the torsion spring.

More preferably, the first recess has a deepest portion where a bottom of the first recess is flush with the spring-accommodating portion.

Preferably, the second recess is formed by a groove which extends circumferentially.

According to this preferred embodiment, since the second recess is formed by a groove which extends circumferentially, it is possible to easily form the second recess e.g. by lathe machining.

Certain preferred embodiments of the invention will now be described by way of example and with reference to the accompanying drawings, in which:
FIG. 1 is a radial cross-sectional view of a vehicle drive system including a flywheel device of a prime mover, according to a first embodiment of the invention;
FIG. 2 is a radial cross-sectional view of a first flywheel appearing in FIG. 1;
FIG. 3 is a partial perspective view of a first casing portion appearing in FIG. 1;
FIG. 4 is a front view of a first stopper portion appearing in FIG. 1;
FIG. 5 is a radial cross-sectional view of a first flywheel of a flywheel device of a prime mover, according to a second embodiment, which is not part of the claimed invention;
FIG. 6 is a partial perspective view of a first casing portion appearing in FIG. 5;
FIG. 7 is a front view of a first stopper portion appearing in FIG. 5;
FIG. 8 is a radial cross-sectional view of a first flywheel of a flywheel device of a prime mover, according to a third embodiment of the invention;
FIG. 9 is a partial perspective view of a first casing portion appearing in FIG. 8; and
FIG. 10 is a front view of a first stopper portion appearing in FIG. 8.

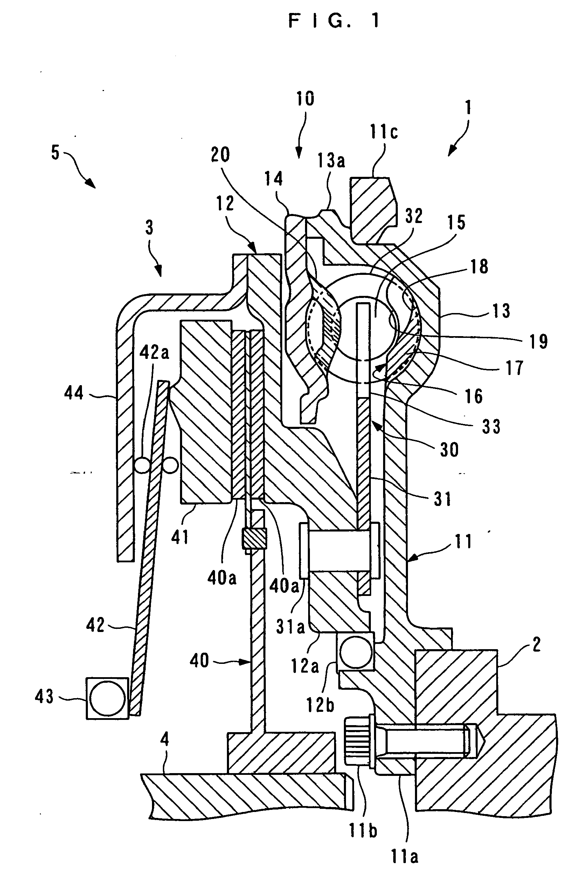

Referring first to FIG. 1, there is schematically shown a cross-section of a vehicle drive system 5 including a flywheel device of a prime mover, according to a first embodiment of the present invention. As shown in FIG. 1, in the vehicle drive system 5, the flywheel device 1 is mounted on a crankshaft 2 (output shaft) of an internal combustion engine, and connected to an input shaft 4 (driven shaft) of a transmission via a clutch 3. Further, the crankshaft 2 and the input shaft 4 of the transmission are concentrically opposed to each other.

The flywheel device 1 is a unitary assembly formed by combining a flywheel 10 and a torsional damper 30. The flywheel 10 is comprised of a first flywheel 11 (flywheel), a second flywheel 12, and so forth.

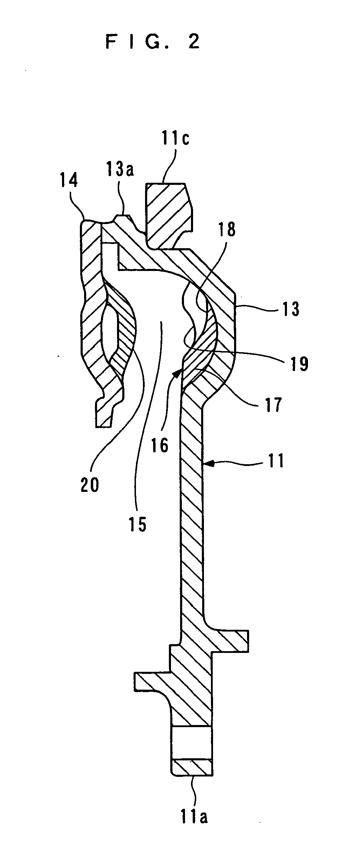

The first flywheel 11 is formed by forging such that it has the shape of a disk with a radial cross-section as shown in FIG. 1, with an opening 11a formed in a center thereof. The first flywheel 11 is rigidly fixed to the crankshaft 2 by a plurality of bolts 11b (only one of which is shown) at a peripheral portion of the opening 11a whereby the first flywheel 11 is mounted on the crankshaft 2 in a manner concentric therewith. Further, as shown in FIG. 2, at an outer end portion (periphery) of the first flywheel 11, a first casing portion 13 and a second casing portion 14 are arranged such that they are opposed to each other in the direction of the axis of the crankshaft 2 (hereinafter simply referred to as "axially"). These first and second casing portions 13, 14 extend continuously along the circumference of the first fly wheel 11, to form a generally ring-like shape.

The first casing portion 13 has an outer end formed with a peripheral wall 13a protruding toward the second casing portion 14. The peripheral wall 13a extends along the circumference of the first flywheel 11. The second casing portion 14 has an annular shape, with an outer end thereof attached to an end of the peripheral wall 13a. Further, the peripheral wall 13a has a starter ring gear 11c mounted on an outer peripheral surface thereof.

On a surface of the first casing portion 13, opposed to the second casing portion 14, there are arranged, for example, a plurality of first stopper portions 16 (stopper portion), only one of which is shown, such that they are located at circumferentially equal intervals, and portions of the first casing portion 13 except for the stopper portions form spring-accommodating portions 21. Each of the first stopper portions 16 protrudes inward with respect to the spring-accommodating portions 21 of the first casing portion 13, and has a thickness larger than that of the spring-accommodating portions 21. Due to the construction described above, a spring-accommodating chamber, which is circumferentially continuous, is formed between the first casing portion 13, the second casing portion14, and the peripheral wall 13a, and this spring-accommodating chamber is circumferentially divided by the first stopper portions 16 into a plurality of spring-accommodating chambers defined by the spring-accommodating portions 21, the peripheral wall 13a, and the second casing portion 14, with spring-receiving stepped portions 17 being formed at respective boundaries between the first stopper portions 16 and spring-accommodating chambers 15.

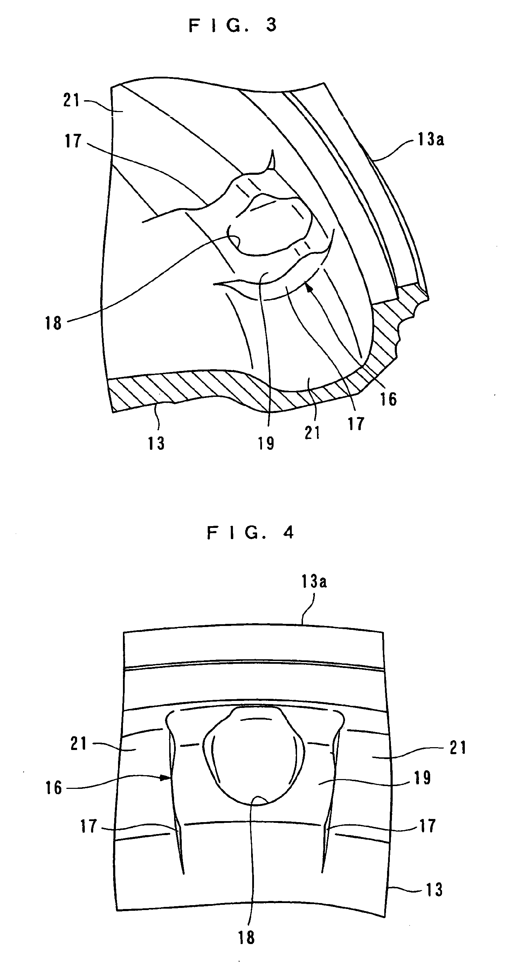

On a surface of the first stopper portion 16, opposed to the second casing portion 14, are formed first and second recesses 18, 19 (recess) for reducing the rigidity of the first stopper portion 16. Referring to FIGS. 3 and 4, the first recess 18 has a generally hemispherical shape with a predetermined size, and is arranged at a circumferentially central portion of the first stopper portion 16, and at the same time slightly offset toward the radially outer side. Further, the deepest portion of the first recess 18 is approximately flush with the spring-accommodating portion 21. The second recess 19 is in the form of a groove extending along the whole circumference of the first stopper portion 16, and has a shallow arcuate bottom surface. Further, the second recess 19 is configured to have a radial width equal to approximately one third of the whole width of the first stopper portion 16, and located at a substantially central portion of the first stopper portion 16, i.e. more toward the inside than the first recess 18. Further, the depth of the second recess 19 is set to a predetermined value allowing a torsion spring 32, referred to hereinafter, to be positively in abutment with the spring-receiving stepped portion 17, e.g. one third of the amount of protrusion of the first stopper portion 16. The first and second recesses 18, 19 having configurations described above are formed e.g. by forging the first flywheel 11 such that the first recess 18 is integrally formed with the first flywheel 11 and thereafter machining the first flywheel 11 on a lathe to form the second recess 19.

It should be noted that the positions, sizes, depths, etc. of the first and second recesses 18, 19 are set as required, such that the rigidity of the first stopper portion 16 is appropriately reduced. The values of them can be easily determined through stress analyses by simulation. Further, the radial width of the second recess 19 is set similarly, and at the same time such that an additional condition of at least the spring-receiving stepped portion 17 being positively provided is satisfied.

On a surface of the second casing portion 14, opposed to the first casing portion 13, there are arranged a plurality of second stopper portions 20 (only one of which is shown) in a manner opposed to the first stopper portion 16. Each of the second stopper portions 20 protrudes toward the first stopper portion 16, and is formed e.g. by pressing the second casing portion 14.

The second flywheel 12 has an annular shape with an opening 12a formed in a center thereof, and has a predetermined radial cross-section. More specifically, the second flywheel 12 extends radially outward from its inner end up to a central portion thereof, and from the central portion, extends slightly in a direction away from the first flywheel 11, and then further radially outward therefrom. The second flywheel 12 is rotatably mounted to the first flywheel 11 in a manner concentric therewith via a bearing 12b at a peripheral portion of the opening 12a. Further, a gasket, not shown, having an annular shape is disposed between the central portion and the second casing portion 14, whereby the space defined between the first flywheel 11 and the second flywheel 12 is held in a liquid-tight state, and filled with grease.

The torsional damper 30 is disposed between the first flywheel 11 and the second flywheel 12 and comprised of a flange 31 and a plurality of torsion springs 32. The flange 31 has an annular shape and has a plurality of arms 33 (only one of which is shown) formed at circumferentially equal intervals at an outer end portion (periphery) thereof such that they each project outward from the flange 31. Further, the flange 31 has an inner end portion thereof concentrically attached to the second flywheel 12 with a rivet 31a and each arm portion 33 is inserted between the first stopper portion 16 and the second stopper portion 20.

Each of the torsion springs 32 is formed by a coil spring having a predetermined length and accommodated in an associated one of the spring-accommodating chambers 15. The torsion spring 32 has opposite ends in abutment with the spring-receiving stepped portion 17 of the first stopper portion 16 and the second stopper portion 20. Further, the opposite end portions of the torsion spring 32 are engaged with opposed ones of the arms 33 of the flange 31, respectively.

According to the construction described above, the torque of the engine is transmitted from the first flywheel 11 to the flange 31 via the torsion springs 32 contained in the respective spring-accommodating chambers 15 and the arms 33 engaged with the torsion springs 32, and further to the second flywheel 12. Thus, the torque of the engine is transmitted to the second flywheel 12, with changes in the torque being reduced by the first flywheel 11, etc., and torsional vibration being damped by the torsion springs 32.

Further, as described hereinbefore, each first stopper portion 16 of the first flywheel 11 is formed with the first and second recesses 18, 19 to reduce the cross-section of the first stopper portion 16, whereby the rigidity of the first stopper portion 16 is reduced. As a result, when a centrifugal force produced by rotation of the crankshaft 2 acts on the first flywheel 11, it is possible to reduce the difference between stress generated in the first stopper portion 16 and stress generated in the spring-accommodating portion 21 of the first flywheel 11. This makes it possible to lessen stress concentration occurring in the first stopper portion 16, thereby making it possible to enhance durability of the first flywheel 11.

The clutch 3 is e.g. of a dry single plate type, and comprised of a clutch disk 40, a diaphragm spring 42 for urging the clutch disk 40 against the second flywheel 12 via a pressure plate 41, a release bearing 43 rotatably and axially movably mounted on the input shaft 4 of the transmission, and a cover 44 attached to the second flywheel 12.

The clutch disk 40 is axially movably and unrotatably mounted on the input shaft 4 of the transmission. Further, the clutch disk 40 has friction disks 40a, 40a mounted on respective opposite surfaces of an outer end (periphery) thereof, and the friction disks 40a, 40a are disposed between the clutch disk 40 (the outer end thereof), and the second flywheel 12 and the pressure plate 41, respectively. The pressure plate 41 is formed as an annular plate having approximately the same shape and area as those of the friction disks 40a. Further, a surface of the pressure plate 41, opposite to the clutch disk 40, is connected to an outer end of the diaphragm spring 42. The diaphragm spring 42 is formed by a plurality of spoke-shaped leaf springs (only one of which is shown), with an inner end thereof connected to the release bearing 43, and an intermediate portion thereof supported by the cover 44 via a fulcrum member 42a. The release bearing 43 is connected to a clutch pedal, not shown, via a release arm, not shown.

Due to the construction described above, when the clutch pedal is not stepped on, the clutch disk 40 is pressed against the second flywheel 12 by the spring force of the diaphragm spring 42, whereby the clutch 3 is engaged to transmit the rotation of the crankshaft 2 to the input shaft 4 of the transmission. Further, when the clutch pedal is stepped on, the release bearing 43 is pressed toward the second flywheel 12 by the release arm, whereby the outer end of the diaphragm spring 42 is moved in a direction away from the clutch disk 40. As a result, the pressure plate 41 is allowed to move away from the clutch disk 40, whereby the clutch 3 is disengaged to allow the second flywheel 12 to freely rotate with respect to the input shaft 4 of the transmission.

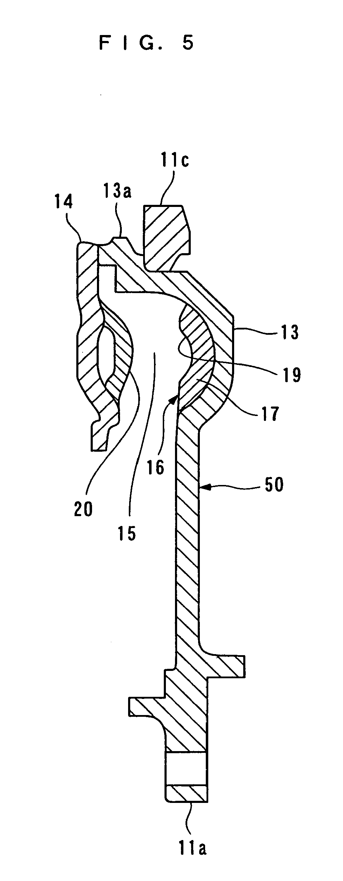

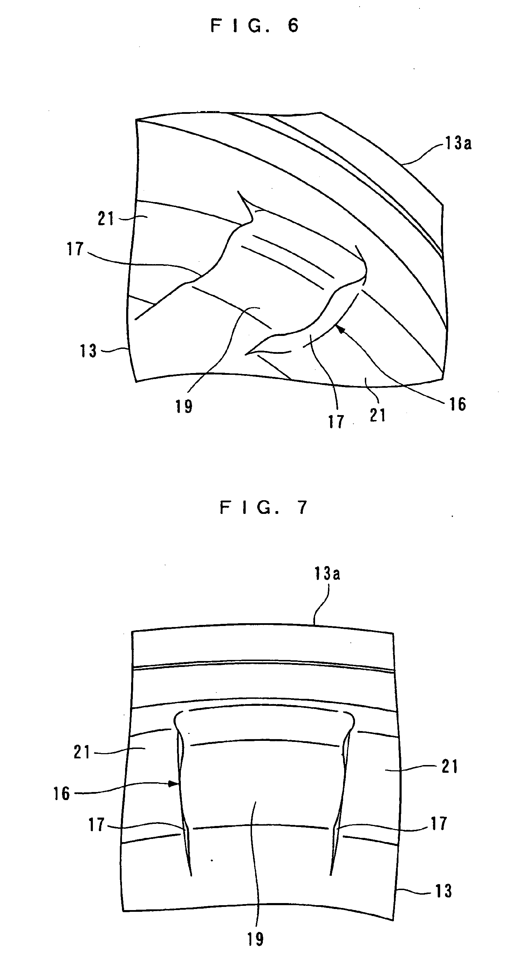

Referring to FIGS. 5 to 7, there is shown a first flywheel 50 of a flywheel device according to a second embodiment, which is not part of the claimed invention. As shown in these figures, the first flywheel 50 has basically the same construction as that of the first flywheel 11 according to the first embodiment, and component elements identical to those of the first flywheel 11 are designated by identical reference numerals. The first flywheel 50 is distinguished from the first embodiment only in that first recesses 18 are completely omitted.

As a result, similarly to the case of the first embodiment, in the present embodiment as well, rigidity of first stopper portions 16 can be reduced by second recesses 19, so that the same advantageous effects as provided by the first embodiment can be obtained. Further, the second recesses 19 can be easily formed by lathe machining, and since the first recesses 18 are omitted which would otherwise be formed during forging of the first flywheel 11, it is possible to simplify the shape of a die for forging of the first flywheel 11.

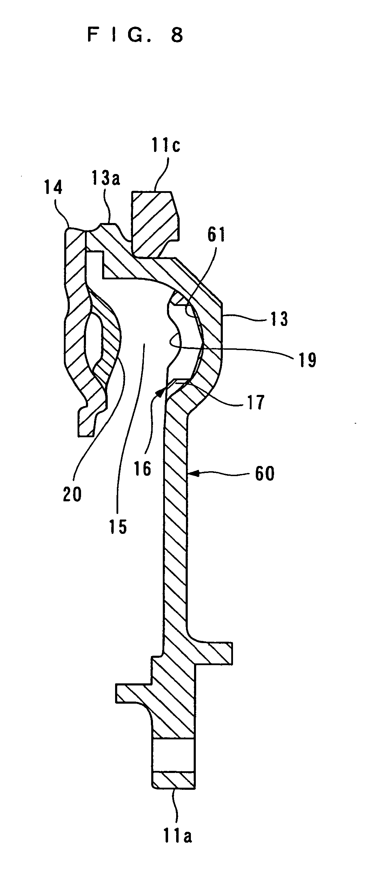

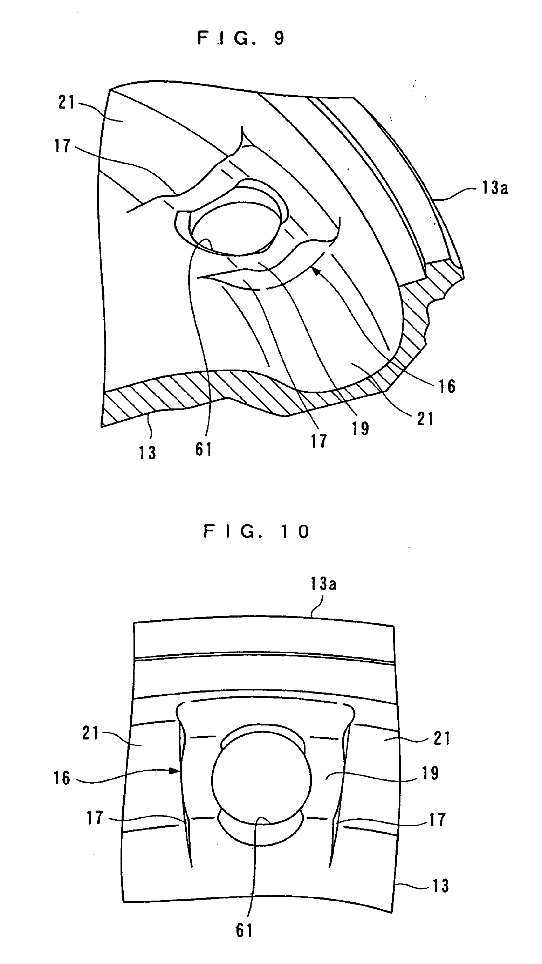

Referring to FIGS. 8 to 10, there is shown a first flywheel 60 of a flywheel device according to a third embodiment of the invention. As shown in these figures, the first flywheel 60 has basically the same construction as that of the first flywheel 11 according to the first embodiment, and component elements identical to those of the first flywheel 11 are designated by identical reference numerals. This first flywheel 60 is distinguished from the first flywheel 11 according to the first embodiment in which the first recesses 18 are formed during forging of the first flywheel 11, in that first recesses 61 are formed by a step drill and therefore have a stepped cross-section corresponding to the shape of the drill. Each first recess 61 is located at a substantially central portion of a corresponding one of the first stopper portions 16. Further, the first recess 61 has a depth larger than that of the first recess 18.

Therefore, similarly to the case of the first embodiment, in the present embodiment as well, rigidity of the first stopper portions 16 can be reduced by the first and second recesses 61, 19, so that the same advantageous effects as provided by the first embodiment can be obtained. Further, the first recesses 61 can be easily formed by drill machining, which makes it possible to achieve a high degree of freedom of the depth of the first recesses 61 and simplify the shape of a die for forging of the first flywheel 60, similarly to the second embodiment.

It should be noted that the present invention is not necessarily limited to the embodiments described above, but can be practiced in various forms. For example, although in the above embodiments, the first recesses 18 have a generally hemispherical shape, and the second recesses 19 are groove-shaped, this is not limitative, but they may have any shapes as desired, so long as they can reduce the rigidity of the first stopper portions. Further, although in the above embodiments, the first flywheel 11 is formed by forging, the same may be formed by press working. In this case as well, by forming the recesses by lathe machining or another step of press working, it is possible to decrease the rigidity of the first stopper portions. This makes it possible to form first flywheels which have been conventionally formed by forging, by press working, depending on the case.

It is further understood by those skilled in the art that the foregoing are preferred embodiments of the invention, and that various changes and modifications may be made without departing from the scope thereof.

## Claims

1. A flywheel device for a prime mover, arranged between an output shaft (2) of the prime mover and a driven shaft (4) driven by the output shaft, including:
a flywheel (10) that is mounted on the output shaft in a manner concentric therewith, said flywheel being formed with a spring-accommodating portion (21) which extends circumferentially, and a stopper portion (16) protruding inward with respect to said spring-accommodating portion in a direction of an axis of the output shaft, thereby forming spring-receiving stepped portions (17) at boundaries between said stopper portion and said spring-accommodating portion,
a flange (31) arranged concentrically with the driven shaft,
a torsion spring (32) that is accommodated in said spring-accommodating portion in a state in which said torsion spring is in abutment with said spring-receiving stepped portions of said stopper portion, and engaged with said flange,
wherein said stopper portion is formed with a first recess (18, 61) for reducing rigidity thereof, **characterised in that** said first recess has a predetermined size and is arranged at a circumferentially central portion of said stopper portion.

2. A flywheel device as claimed in claim 1, wherein said first recess (18, 61) has a generally hemispherical shape.

3. A flywheel device as claimed in claim 1, wherein said first recess (61) is formed by a drill.

4. A flywheel device as claimed in any of claims 1 to 3, wherein said stopper portion (16) is further formed with a second recess (19) for reducing rigidity thereof, and said second recess is formed along a whole length of said stopper portion such that said second recess has a depth allowing said spring-receiving stepped portions (17) to positively receive said torsion spring (32).

5. A flywheel device for a prime mover, arranged between an output shaft (2) of the prime mover and a driven shaft (4) driven by the output shaft, including:
a flywheel (10) that is mounted on the output shaft in a manner concentric therewith, said flywheel being formed with a spring-accommodating portion (21) which extends circumferentially, and a stopper portion (16) protruding inward with respect to said spring-accommodating portion in a direction of an axis of the output shaft, thereby forming spring-receiving stepped portions (17) at boundaries between said stopper portion and said spring-accommodating portion,
a flange (31) arranged concentrically with the driven shaft,
a torsion spring (32) that is accommodated in said spring-accommodating portion in a state in which said torsion spring is in abutment with said spring-receiving stepped portions of said stopper portion, and engaged with said flange,
wherein said stopper portion is formed with a recess for reducing rigidity thereof, said recess is formed by a groove which extends circumferentially, and **characterised in that** said recess comprises a first recess (18, 61), and a second recess (19) which is shallower and longer in circumferential length than said first recess.

6. A flywheel device as claimed in claim 5, wherein said second recess (19) is formed along a whole length of said stopper portion (16) such that said recess has a depth allowing said spring-receiving stepped portions (17) to positively receive said torsion spring (32).

7. A flywheel device as claimed in claim 5 or 6, wherein said first recess (18, 61) has a deepest portion where a bottom of said first recess is flush with said spring-accommodating portion (21).

## Patentansprüche

1. Schwungradvorrichtung für eine Antriebsmaschine, welche zwischen einer Ausgangswelle (2) der Antriebsmaschine und einer durch die Ausgangswelle angetriebene Abtriebswelle (4) angeordnet ist, umfassend: ein Schwungrad (10), welches an der Ausgangswelle konzentrisch zu dieser montiert ist, wobei das Schwungrad mit einem Federaufnahmeabschnitt (21) ausgebildet ist, welcher sich in Umfangsrichtung erstreckt, und mit einem Anschlagabschnitt (16) ausgebildet ist, welcher bezüglich des Federaufnahmeabschnitts in einer Richtung einer Achse der Ausgangswelle nach innen vorragt, wodurch abgestufte Feder-aufnehmende Abschnitte (17) bei Grenzbereichen zwischen dem Anschlagabschnitt und dem Federaufnahmeabschnitt gebildet sind,
einen Flansch (31), welcher konzentrisch zu der Abtriebswelle angeordnet ist,
eine Torsionsfeder (32), welche in dem Federaufnahmeabschnitt in einem Zustand aufgenommen ist, in welchem die Torsionsfeder in Anlage an den abgestuften Feder-aufnehmenden Abschnitten des Anschlagabschnitts ist und in Eingriff mit dem Flansch ist,
wobei der Anschlagabschnitt mit einer ersten Ausnehmung (18, 61) ausgebildet ist, um seine Steifigkeit zu verringern,
**dadurch gekennzeichnet, dass** die erste Ausnehmung eine vorbestimmte Größe aufweist und bei einem in Umfangsrichtung zentralen Abschnitt des Anschlagabschnitts angeordnet ist.

2. Schwungradvorrichtung nach Anspruch 1, wobei die erste Ausnehmung (18, 61) eine im Allgemeinen halbkugelförmige Gestalt aufweist.

3. Schwungradvorrichtung nach Anspruch 1, wobei die erste Ausnehmung (61) durch einen Bohrer gebildet ist.

4. Schwungradvorrichtung nach einem der Ansprüche 1 bis 3, wobei der Anschlagabschnitt (16) ferner mit einer zweiten Ausnehmung (19) gebildet ist, um seine Steifigkeit zu verringern, und die zweite Ausnehmung entlang einer gesamten Länge des Anschlagabschnitts derart ausgebildet ist, dass die zweite Ausnehmung eine Tiefe aufweist, welche den gestuften Feder-aufnehmenden Abschnitten (17) ermöglicht, die Torsionsfeder (32) sicher aufzunehmen.

5. Schwungradvorrichtung für eine Antriebsmaschine, welche zwischen einer Ausgangswelle (2) der Antriebsmaschine und einer durch die Ausgangswelle angetriebene Abtriebswelle (4) angeordnet ist, umfassend: ein Schwungrad (10), welches an der Ausgangswelle konzentrisch zu dieser montiert ist, wobei das Schwungrad mit einem Federaufnahmeabschnitt (21) ausgebildet ist, welcher sich in Umfangsrichtung erstreckt, und mit einem Anschlagabschnitt (16) ausgebildet ist, welcher bezüglich des Federaufnahmeabschnitts in einer Richtung einer Achse der Ausgangswelle nach innen vorragt, wodurch abgestufte Feder-aufnehmende Abschnitte (17) bei Grenzbereichen zwischen dem Anschlagabschnitt und dem Federaufnahmeabschnitt gebildet sind,
einen Flansch (31), welcher konzentrisch zu der Abtriebswelle angeordnet ist,
eine Torsionsfeder (32), welche in dem Federaufnahmeabschnitt in einem Zustand aufgenommen ist, in welchem die Torsionsfeder in Anlage an den abgestuften Feder-aufnehmenden Abschnitten des Anschlagabschnitts ist und in Eingriff mit dem Flansch ist,
wobei der Anschlagabschnitt mit einer ersten Ausnehmung ausgebildet ist, um seine Steifigkeit zu verringern, wobei die Ausnehmung durch eine Nut gebildet ist, welche sich in Umfangsrichtung erstreckt, und **dadurch gekennzeichnet, dass** die Ausnehmung eine erste Ausnehmung (18, 61) umfasst und eine zweite Ausnehmung (19) umfasst, welche schmäler und länger in der Umfangslänge ist als die erste Ausnehmung.

6. Schwungradvorrichtung nach Anspruch 5, wobei die zweite Ausnehmung (19) entlang einer gesamten Länge des Anschlagabschnitts (16) derart ausgebildet ist, dass die Ausnehmung eine Tiefe aufweist, welche den gestuften Feder-aufnehmenden Abschnitten (17) ermöglicht, die Torsionsfeder (32) sicher aufzunehmen.

7. Schwungradvorrichtung nach Anspruch 5 oder 6, wobei die erste Ausnehmung (18, 61) einen tiefsten Abschnitt dort aufweist, wo ein Boden der ersten Ausnehmung bündig mit dem Federaufnahmeabschnitt (21) ist.

## Revendications

1. Dispositif à volant pour une machine motrice, agencé entre un arbre de sortie (2) de la machine motrice et un arbre entraîné (4) entraîné par l'arbre de sortie, comportant :
un volant (10) qui est monté sur l'arbre de sortie de manière concentrique avec celui-ci, ledit volant étant formé avec une partie (21) logeant un ressort qui s'étend de manière circonférentielle, et une partie de butée (16) dépassant vers l'intérieur par rapport à ladite partie logeant un ressort dans une direction d'un axe de l'arbre de sortie, formant de ce fait des parties étagées (17) recevant un ressort aux limites situées entre ladite partie de butée et ladite partie logeant un ressort,
une bride (31) agencée de manière concentrique avec l'arbre entraîné,
un ressort de torsion (32) qui est logé dans ladite partie logeant un ressort dans un état dans lequel ledit ressort de torsion est en butée avec lesdites parties étagées recevant le ressort de ladite partie de butée, et en prise avec ladite bride,
dans lequel ladite partie de butée est formée avec un premier évidement (18, 61) destiné à réduire la rigidité de celle-ci, **caractérisé en ce que** ledit premier évidement présente une taille prédéterminée et est agencé dans une partie centrale de manière circonférentielle de ladite partie de butée.

2. Dispositif à volant selon la revendication 1, dans lequel ledit premier évidement (18, 61) présente une forme généralement hémisphérique.

3. Dispositif à volant selon la revendication 1, dans lequel ledit premier évidement (61) est formé par un forêt.

4. Dispositif à volant selon l'une quelconque des revendications 1 à 3, dans lequel ladite partie de butée (16) est formée en outre avec un second évidement (19) destiné à réduire la rigidité de celle-ci, et ledit second évidement est formé le long d'une longueur totale de ladite partie de butée, de telle sorte que ledit second évidement présente une profondeur permettant auxdites parties étagées recevant un ressort (17) de recevoir positivement ledit ressort de torsion (32).

5. Dispositif à volant pour une machine motrice, agencé entre un arbre de sortie (2) de la machine motrice et un arbre entraîné (4) entraîné par l'arbre de sortie, comportant :
un volant (10) qui est monté sur l'arbre de sortie de manière concentrique avec celui-ci, ledit volant étant formé avec une partie (21) logeant un ressort qui s'étend de manière circonférentielle, et une partie de butée (16) dépassant vers l'intérieur par rapport à ladite partie logeant un ressort dans une direction d'un axe de l'arbre de sortie, formant de ce fait des parties étagées (17) recevant un ressort aux limites situées entre ladite partie de butée et ladite partie logeant un ressort,
une bride (31) agencée de manière concentrique avec l'arbre entraîné,
un ressort de torsion (32) qui est logé dans ladite partie logeant un ressort dans un état dans lequel ledit ressort de torsion est en butée avec lesdites parties étagées recevant un ressort de ladite partie de butée, et en prise avec ladite bride,
dans lequel ladite partie de butée est formée avec un évidement destiné à réduire la rigidité de celle-ci, ledit évidement est formé par une rainure qui s'étend de manière circonférentielle, et **caractérisé en ce que** ledit évidement comprend un premier évidement (18, 61), et un second évidement (19) qui est moins profond et plus long en longueur circonférentielle que ledit premier évidement.

6. Dispositif à volant selon la revendication 5, dans lequel ledit second évidement (19) est formé le long d'une longueur totale de ladite partie de butée (16), de telle sorte que ledit évidement présente une profondeur permettant auxdites parties étagées recevant un ressort (17) de recevoir positivement ledit ressort de torsion (32).

7. Dispositif à volant selon la revendication 5 ou 6, dans lequel ledit premier évidement (18, 61) présente une partie plus profonde dans laquelle un fond dudit premier évidement est aligné sur ladite partie (21) logeant un ressort.
